# DEMANDE DE BREVET EUROPEEN

(11) **EP 3 598 215 A1**
(43) Date de publication de la demande: **22.01.2020**
(21) Numéro de dépôt: 19186596.3
(22) Date de dépôt: 16.07.2019
(51) Int. Cl.: G02C 13/00, B08B 1/04

(54) **DISPOSITIF POUR LE NETTOYAGE DES VERRES D'UNE PAIRE DE LUNETTES**

(30) Priorité: 16.07.2018 BE 201805512
(71) Demandeur: Cordier, Michel, 7300 Boussu (BE)
(72) Inventeur: Cordier, Michel, 7300 Boussu (BE)
(74) Mandataire: Connor, Marco Tom

(57) **Abrégé**

Dispositif pour le nettoyage des verres d'une paire de lunettes, ladite paire de lunettes (11) comprenant un verre droit (12) et un verre gauche (13), lesdits verres droit et gauche comprenant une face avant (12a, 13a) et une face arrière (12b, 13b), ledit dispositif comprenant:
a. une structure rigide (1) comprenant une base (2) pour la stabilisation de ladite structure (1) sur une surface plane,
b. une pluralité de rouleaux de nettoyage (31a, 31b, 32a , 32b), répartis sur un axe longitudinal avant (4) et un axe longitudinal arrière (5) de ladite structure,
c. des moyens d'entrainement en rotation (6, 7) desdits rouleaux de nettoyage,
dans lequel lesdits rouleaux de nettoyage avant et arrière positionnés sur l'axe longitudinal avant ou arrière sont distribués sur ledit axe longitudinal avant ou arrière de manière à nettoyer simultanément la face avant ou arrière des verres droit et gauche de ladite paire de lunettes.

## Description

### Domaine de l'invention

L'invention se rapporte à un dispositif pour le nettoyage des verres d'une paire de lunettes.

### Description de l'art antérieur

Les lunettes sont des accessoires personnels très répandus, qu'elles aient pour but la correction de la vision ou la protection des yeux en cas de lunettes fumées. Les lunettes, et en particulier leurs verres, sont exposées à différents types d'encrassement, tels que la sueur ou les peaux mortes du porteur, ou encore la poussière ambiante, qui s'accumulent à leur surface. Un nettoyage fréquent des verres est donc nécessaire. Une solution couramment employée pour atteindre cet objectif est l'utilisation d'un chiffon à la texture non abrasive directement porté au contact des verres par le porteur. Un produit liquide nettoyant peut également être employé pour faciliter le dégraissage des verres. Le nettoyage obtenu par cette technique n'est cependant pas toujours optimal, en particulier si la dextérité manuelle du porteur n'est pas suffisante. Ce type de mouvement peut en effet être difficile à réaliser par de jeunes enfants, des personnes âgées ou encore des adultes souffrant d'un handicap moteur de la main. Ce nettoyage à l'aide d'un chiffon prend par ailleurs un certain temps car chacun des verres est nettoyé individuellement.

Il existe cependant sur le marché des dispositifs variés permettant de faciliter ou d'optimiser le nettoyage des verres de lunette. Le document US5988910 divulgue ainsi un appareil comprenant une poignée et une paire de rouleaux nettoyants, potentiellement motorisés, configurés pour nettoyer simultanément les faces opposées d'un verre de lunettes lorsqu'un mouvement de balayage est appliqué par l'utilisateur. Ce type de dispositif nécessite cependant toujours une certaine dextérité manuelle de la part de l'utilisateur et ne permet par ailleurs de nettoyer qu'un seul des deux verres à la fois.

Le document US 6,821,355 divulgue quant à lui un appareil motorisé et automatique pour la mise en oeuvre du lavage d'une paire de lunettes à l'aide d'une solution nettoyante. Dans ce système, le lavage est entièrement automatisé, les lunettes étant initialement attachées par l'utilisateur à un bras agitateur assurant un mouvement de va et vient des lunettes dans le bac de l'appareil comprenant la solution nettoyante. Le séchage des lunettes peut également être pris en charge par l'appareil. Bien que ce système présente l'avantage d'être entièrement automatisé, il est cependant complexe et par conséquent couteux à fabriquer. Par ailleurs, le bac de l'appareil doit être rempli de solution lavante avant utilisation, et cette dernière doit ensuite être évacuée, ce qui rend l'appareil plutôt inadapté à un usage très fréquent.

### Résumé de l'invention

Un objet de l'invention est de fournir un système pour le nettoyage automatisé des verres d'une paire de lunettes ne nécessitant pas de dextérité manuelle de la part de l'utilisateur. Le système doit être un appareil domestique à la fois robuste, rapide et facile à utiliser. Un autre objet de l'invention est de minimiser la quantité de produits consommables à utiliser pour réaliser le nettoyage.

La présente invention est définie dans les revendications indépendantes annexées. Des modes de réalisation préférés sont définis dans les revendications dépendentes.

La présente invention se rapporte à un dispositif pour le nettoyage des verres d'une paire de lunettes, ladite paire de lunettes comprenant un verre droit et un verre gauche, lesdits verres droit et gauche comprenant une face avant et une face arrière, ledit dispositif comprenant :
a. une structure rigide comprenant une base pour la stabilisation de ladite structure sur une surface plane,
b. une pluralité de rouleaux de nettoyage, lesdits rouleaux étant montés mobiles en rotation sur ladite structure rigide et étant répartis sur un axe longitudinal avant et un axe longitudinal arrière de ladite structure, ledit axe longitudinal avant étant parallèle à l'axe longitudinal arrière,
c. des moyens d'entrainement en rotation desdits rouleaux de nettoyage, lesdits moyens étant aptes à entrainer en rotation simultanément les rouleaux de nettoyage positionnés sur un même des deux axes longitudinaux,
dans lequel :
- ladite structure rigide comprend des passages pour introduire la paire de lunettes dans la structure avec ses verres droits et gauches positionnés dans un espace de nettoyage (8) entre les rouleaux de nettoyage (31a, 32a) positionnés sur l'axe longitudinal avant (4) et les rouleaux de nettoyage (31b, 32b) positionnés sur l'axe longitudinal arrière (5), lesdits passages comprenant des passages de branches pour recevoir les branches dépliées de ladite paire de lunettes autour des rouleaux de nettoyage positionnés sur l'axe longitudinal arrière,
- lesdits rouleaux de nettoyage positionnés sur l'axe longitudinal avant sont distribués sur ledit axe longitudinal avant de manière à nettoyer simultanément la face avant des verres droit et gauche de ladite paire de lunettes,
- lesdits rouleaux de nettoyage positionnés sur l'axe longitudinal arrière sont distribués sur ledit axe longitudinal arrière de manière à nettoyer simultanément la face arrière des verres droit et gauche de ladite paire de lunettes.

Selon un mode de réalisation avantageux, lesdits moyens d'entrainement en rotation sont aptes à entrainer en rotation simultanément les rouleaux de nettoyage positionnés sur l'axe longitudinal avant et sur l'axe longitudinal arrière.

Selon un mode de réalisation avantageux, lesdits moyens d'entrainement sont configurés pour entrainer en rotation selon un même sens de rotation les rouleaux de rotation positionnés sur l'axe longitudinal avant et sur l'axe longitudinal arrière.

Selon un mode de réalisation avantageux, les rouleaux de nettoyage positionnés sur l'axe longitudinal avant sont des rouleaux cylindriques dont les axes de révolution sont alignés sur ledit axe longitudinal avant.

Selon un mode de réalisation avantageux, deux rouleaux de nettoyage sont positionnés sur l'axe longitudinal avant, les deux rouleaux de nettoyage comprenant un rouleau de nettoyage avant droit pour le nettoyage de la face avant du verre droit de la paire de lunettes et un rouleau de nettoyage avant gauche pour le nettoyage de la face avant du verre gauche de la paire de lunettes, un espace libre entre les rouleaux de nettoyage avant droit et gauche étant prévu sur l'axe longitudinal avant, ledit espace libre étant configuré pour faire face au pont de nez de la paire de lunettes introduite dans la structure rigide.

Selon un mode de réalisation avantageux, deux rouleaux de nettoyage sont positionnés sur l'axe longitudinal avant, les deux rouleaux de nettoyage comprenant un rouleau de nettoyage avant droit pour le nettoyage de la face avant du verre droit de la paire de lunettes et un rouleau de nettoyage avant gauche pour le nettoyage de la face avant du verre gauche de la paire de lunettes, un espace libre entre les rouleaux de nettoyage avant droit et gauche étant prévu sur l'axe longitudinal avant, ledit espace libre étant configuré pour faire face au pont de nez de la paire de lunettes introduite dans la structure rigide.

Selon un mode de réalisation avantageux, les rouleaux de nettoyage positionnés sur l'axe longitudinal arrière sont des rouleaux cylindriques dont les axes de révolution sont alignés sur ledit axe longitudinal arrière.

Selon un mode de réalisation avantageux, deux rouleaux de nettoyage sont positionnés sur l'axe longitudinal arrière, les deux rouleaux de nettoyage comprenant un rouleau de nettoyage arrière droit pour le nettoyage de la face arrière du verre droit de la paire de lunettes et un rouleau de nettoyage arrière gauche pour le nettoyage de la face arrière du verre gauche de la paire de lunettes, un espace libre entre les rouleaux de nettoyage arrière droit et gauche étant prévu sur l'axe longitudinal arrière, ledit espace libre étant configuré pour faire face au pont de nez de la paire de lunettes introduite dans la structure rigide.

Selon un mode de réalisation avantageux, les rouleaux de nettoyage positionnés sur l'axe longitudinal avant peuvent également être des rouleaux cylindriques dont les axes de révolution sont perpendiculaires audit axe longitudinal avant.

Selon un mode de réalisation avantageux, les rouleaux de nettoyage positionnés sur l'axe longitudinal arrière peuvent également être des rouleaux cylindriques dont les axes de révolution sont perpendiculaires audit axe longitudinal arrière.

Selon un mode de réalisation avantageux, lequel ladite structure rigide comprend un boitier, ledit boitier comprenant profil en U dans sa partie supérieure, ledit profil en U définissant une partie concave du boitier délimitée par une paroi inférieure et deux parois latérales, des trous traversants étant percés dans les parois latérales du profil en U, les rouleaux de nettoyage étant saillants vers l'intérieur dudit profil en U à travers lesdits trous traversants.

Selon un mode de réalisation avantageux, les moyens d'entrainement en rotation desdits rouleaux de nettoyage comprennent un premier moteur électrique pour entrainer les rouleaux de nettoyage avant et un second moteur électrique pour entrainer les rouleaux de nettoyage arrière.

Selon un mode de réalisation avantageux, les moyens d'entrainement en rotation desdits rouleaux de nettoyage comprennent un premier moteur électrique pour entrainer les rouleaux de nettoyage avant et un second moteur électrique pour entrainer les rouleaux de nettoyage arrière. La transmission du mouvement de rotation entre les premiers et seconds moteurs électriques et les rouleaux de nettoyage est alors avantageusement assurée par des systèmes d'engrenage.

Selon un autre mode de réalisation avantageux, les moyens d'entrainement en rotation desdits rouleaux de nettoyage comprennent un unique moteur électrique pour entrainer en rotation les rouleaux de nettoyage avant et les rouleaux de nettoyage arrière.

Selon un mode de réalisation avantageux, les rouleaux de nettoyage avant sont fixés à un même arbre rotatif avant.

Selon un mode de réalisation avantageux, les rouleaux de nettoyage arrière sont fixés à un même arbre rotatif arrière.

Selon un mode de réalisation avantageux, le dispositif comprend un bouton poussoir sur la structure rigide pour actionner les moyens d'entrainement en rotation des rouleaux de nettoyage.

Selon un mode de réalisation avantageux, le bouton poussoir est disposé dans l'espace de nettoyage de manière à entrer en contact avec le pont de nez de la paire de lunettes et ainsi actionner les moyens d'entrainement lorsque ladite paire de lunettes est introduite dans ladite structure.

Selon un mode de réalisation avantageux, les rouleaux de nettoyage comprennent un tissu à base de microfibres.

Selon un mode de réalisation avantageux, un gradient de densité de tissu est appliqué auxdits rouleaux de nettoyage, ledit gradient étant orienté radialement de l'extérieur vers l'intérieur desdits rouleaux de nettoyage. Dans cette configuration, la densité de masse du matériau ou tissu utilisé pour les rouleaux de nettoyage est donc une fonction décroissante de la distance radiale par rapport à l'axe de révolution des rouleaux de nettoyage.

Selon un mode de réalisation avantageux, les rouleaux de nettoyage sont montés de manière amovible sur des arbres rotatifs mobiles en rotation par rapport à ladite structure rigide.

L'invention se rapporte également à un kit pour le montage d'un dispositif pour le nettoyage des verres d'une paire de lunettes, ledit dispositif comprenant un boitier avec un profil en U tel que discuté précédemment, ledit kit comprenant :
- une structure rigide,
- un premier boitier ayant une première largeur L1 et un premier jeu de rouleaux de nettoyage, lesdits premiers boitier et premier jeu de rouleaux de nettoyage ayant des dimensions adaptées pour monter à partir de ladite structure rigide un dispositif pour le nettoyage d'une paire de lunettes de taille enfant,
- un second boitier ayant une seconde largeur L2 > L1 et un second jeu de rouleaux de nettoyage, lesdits second boitiers et second jeu de rouleaux de nettoyage ayant des dimensions adaptées pour monter à partir de ladite structure rigide un dispositif pour le nettoyage d'une paire de lunettes de taille adulte.

### Brève description des figures

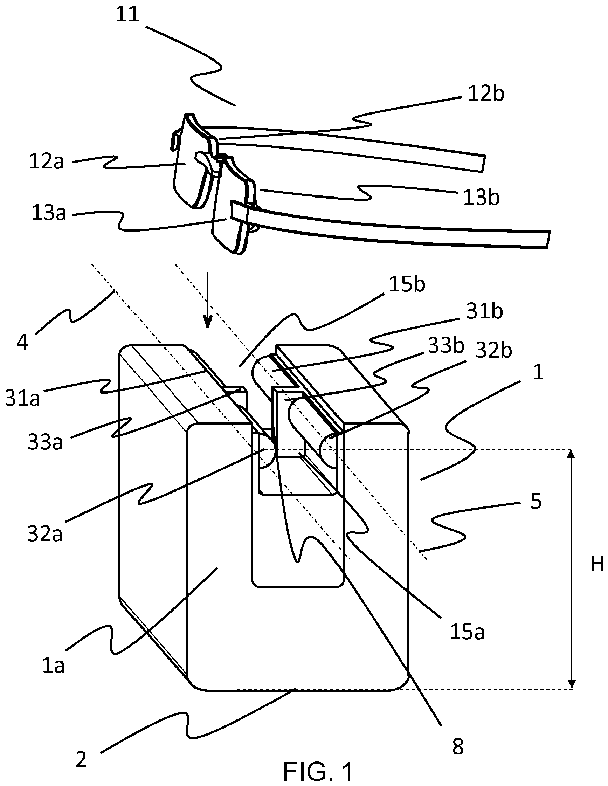

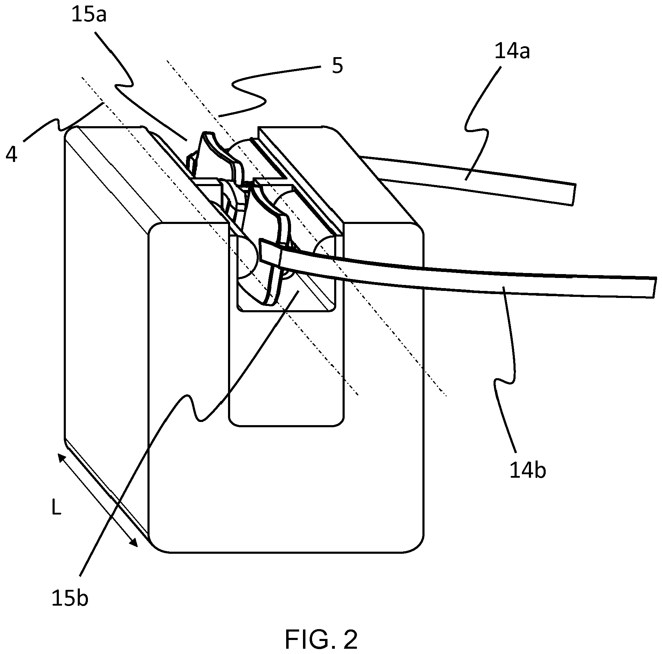

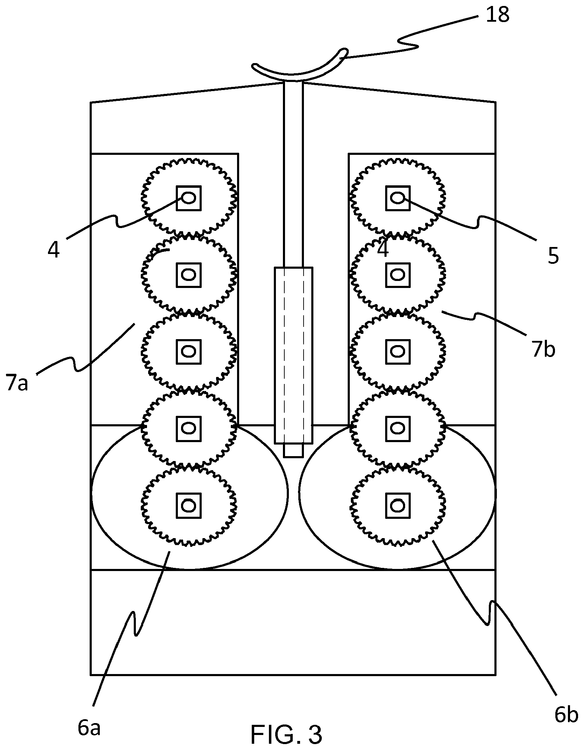

Ces aspects de l'invention et d'autres aspects complémentaires seront expliqués plus en détails au moyen d'exemples et par référence au dessin annexé :
**La** **Figure 1** représente un exemple de dispositif selon l'invention avant insertion d'une paire de lunettes ;
**La** **Figure 2** représente un exemple de dispositif selon l'invention après insertion d'une paire de lunettes ;
**La** **Figure 3** représente une vue en coupe du dispositif selon les Figures 1&2 comprenant en plus un bouton poussoir 18 destiné à entrer en contact avec le pont de nez de la paire de lunettes 11 ;

Les figures ne sont pas dessinées à l'échelle.

### Description détaillée de modes de réalisation préférés

Les Figures 1-3 montrent un exemple de dispositif pour le nettoyage des verres d'une paire de lunettes 11 selon l'invention. La paire de lunettes 11 peut être une paire de lunettes de vue ou une paire de lunettes de soleil et comprend un verre droit 12 et un verre gauche 13. Le dispositif comprend une structure rigide 1 comportant une base 2 pour la stabilisation de la structure 1 sur une surface plane, telle qu'un bureau ou une table. Le dispositif comprend également une pluralité de rouleaux de nettoyage 31a, 31b, 32a, 32b montés mobiles en rotation sur la structure rigide 1. Les rouleaux de nettoyage sont répartis selon deux axes parallèles : un axe longitudinal avant 4 et un axe longitudinal arrière 5 situés à une hauteur H par rapport à la base 2 du dispositif. La structure rigide 1 comprend des passages pour introduire la paire de lunettes dans la structure avec ses verres droits et gauches positionnés dans un espace de nettoyage 8 entre les rouleaux de nettoyage 31a, 32a positionnés sur l'axe longitudinal avant 4 et les rouleaux de nettoyage 31b, 32b positionnés sur l'axe longitudinal arrière 5.

La structure rigide 1 comprend des passages pour introduire la paire de lunettes avec ses verres droit 12 et gauche 13 positionnés dans l'espace de nettoyage 8. Ces passages permettent donc d'amener les verres droit 12 et gauche 13 dans l'espace de nettoyage 8 et sont configurés pour recevoir les branches dépliées 14a, 14b de la paire de lunettes autour des rouleaux de nettoyage 31b, 32b positionnés sur l'axe longitudinal arrière 5.

Les rouleaux de nettoyage 31a, 32a positionnés sur l'axe longitudinal avant sont distribués sur l'axe longitudinal avant 4 de manière à nettoyer simultanément la face avant 12a, 13a des verres droit 12 et gauche 13 de la paire de lunettes 11. L'étendue spatiale couverte par les rouleaux de nettoyage avant 31a, 32a le long de l'axe longitudinal 4 est donc avantageusement supérieure à la distance séparant les deux verres 12 et 13, de manière à ce que les rouleaux de nettoyage avant 31a, 32a puissent contacter simultanément les faces avant 12a, 13a des deux verres 12 et 13 en vue de les nettoyer de manière concomitante.

De manière similaire, les rouleaux de nettoyage 31b, 32b positionnés sur l'axe longitudinal arrière 5 sont distribués sur l'axe longitudinal arrière 5 de manière à nettoyer simultanément la face arrière 12b, 13b des verres droit 12 et gauche 13 de la paire de lunettes 11. L'étendue spatiale couverte par les rouleaux de nettoyage avant 31b, 32b le long de l'axe longitudinal 5 est donc avantageusement supérieure à la distance séparant les deux verres 12 et 13, de manière à ce que les rouleaux de nettoyage 31b, 32b puissent contacter simultanément les faces arrière 12b, 13b des deux verres 12 et 13 en vue de les nettoyer de manière concomitante. Par ailleurs, en vue de la réalisation des passages pour introduire la paire de lunettes 11 dans le dispositif, les rouleaux de nettoyage arrière 31b, 32b ont avantageusement une étendue spatiale le long de l'axe longitudinal 5 inférieure à la distance séparant les deux branches dépliées 14a, 14b de la paire de lunettes 1.

Dans le dispositif illustré aux Figures 1-3, les rouleaux de nettoyage avant 31a, 32a sont des rouleaux cylindriques dont les axes de révolution sont alignés sur l'axe longitudinal avant 4. De manière similaire, les rouleaux de nettoyage arrière 31b, 32b sont des rouleaux cylindriques dont les axes de révolution sont alignés sur l'axe longitudinal arrière 5.

Alternativement, les rouleaux de nettoyage avant 31a, 32a et arrière 31b, 32b peuvent être des rouleaux de nettoyage cylindriques dont les axes de révolution sont perpendiculaires respectivement à l'axe longitudinal avant 4 et à l'axe longitudinal arrière 5.

Dans le dispositif illustré aux Figures 1-3, les deux rouleaux de nettoyage avant comprennent un rouleau de nettoyage avant droit 31a pour le nettoyage de la face avant 12a du verre droit 12 et un rouleau de nettoyage avant gauche 32a pour le nettoyage de la face avant 13a du verre gauche. De manière similaire, les deux rouleaux de nettoyage arrière comprennent un rouleau de nettoyage arrière droit 31b pour le nettoyage de la face arrière 12b du verre droit 12 et un rouleau de nettoyage arrière gauche 32b pour le nettoyage de la face arrière 13b du verre gauche. Dans cette configuration, un espace libre est avantageusement agencé sur l'axe longitudinal avant 4 entre les rouleaux avant droit 31a et gauche 32a. De manière équivalente, un espace libre est avantageusement agencé sur l'axe longitudinal arrière 5 entre les rouleaux arrière droit 31b et gauche 32b. Ces espaces libres font face au pont de nez de la paire de lunettes 11 introduites dans la structure 1. Il n'est en effet pas nécessaire d'avoir des rouleaux de nettoyage en face du pont de nez. Dans certaines modes de réalisation, tel que celui représenté à la Figure 1, des saillies 33a, 33b de la structure rigide 1 peuvent être insérées dans ces espaces libres. Alternativement, cet espace libre peut ne pas être comblé par des parties de la structure rigide 1. Dans ces configurations, cet espace libre est alors particulièrement adapté à recevoir des ponts de nez qui protruderaient sensiblement en avant ou en arrière de la surface avant ou arrière des verres 12, 13.

Le dispositif selon l'invention comprend des moyens d'entrainement en rotation 6a, 6b, 7a, 7b des rouleaux de nettoyage 31a, 31b, 32a, 32b. Ces moyens sont conçus pour entrainer simultanément les rouleaux de nettoyage positionnés sur un même des deux axes longitudinaux 4 et 5. De cette manière les faces avant droite 12a et gauche 13a, tout comme les faces arrière droite 12b et gauche 13b, sont nettoyées simultanément lorsque les lunettes 11 sont introduites dans le dispositif et que les rouleaux de nettoyage sont entrainés en rotation.

Dans le cas où les rouleaux de nettoyage n'ont pas une étendue spatiale suffisante pour couvrir la superficie totale des verres 12, 13, des mouvements latéraux et/ou verticaux doivent être appliqués par l'utilisateur à la paire de lunettes 11, en vue de nettoyer l'intégralité des faces avant 12a, 13a ou arrière 12b, 13b des verres de la paire de lunettes.

Par ailleurs, un mouvement d'avant en arrière de la paire de lunettes 11, selon un axe perpendiculaire aux axes longitudinaux avant 4 et arrière 5, est également nécessaire pour nettoyer successivement les faces avant et arrière des verres lorsqu'il existe un espace libre entre les rouleaux de nettoyage avant 31a, 32a et arrière 31b, 32b a une largeur supérieure à l'épaisseur des verres 12, 13.

Dans le cas où l'espace libre entre les rouleaux de nettoyage avant 31a, 32a a une largeur inférieure à l'épaisseur des verres 12, 13 ou est même inexistant, lesdits verres sont alors en contact simultanément avec les rouleaux de nettoyage avant 31a, 32a et arrière 31b, 32b. Cette configuration est particulièrement avantageuse, car les quatre faces 12a, 12b, 13a, 13b peuvent alors nettoyées simultanément. Dans ce mode de réalisation où l'espace libre entre les rouleaux de nettoyage est particulièrement réduit ou est même inexistant, les rouleaux de nettoyage comprennent avantageusement une partie externe réalisée en un matériau résilient, tel qu'une mousse à base de microfibres, pour que des verres de lunettes, d'une épaisseur quelconque, puissent être introduits entre les rouleaux de nettoyage.

Les moyens d'entrainement en rotation peuvent comprendre un premier moteur électrique 6a pour entrainer les rouleaux de nettoyage avant 31a, 32a et un second moteur électrique 6b pour entrainer les rouleaux de nettoyage arrière 31b, 32b. La transmission du mouvement de rotation entre les moteurs électriques 6a, 6b et les rouleaux de nettoyage peut alors être assurée par des trains d'engrenage 7a, 7b. Alternativement, un unique moteur électrique peut être utilisé pour entrainer en rotation l'ensemble des rouleaux de nettoyage avant et arrière, à l'aide d'un système de transmission approprié, par exemple à base d'engrenages ou de courroies de transmission.

Les moyens d'entrainement en rotation doivent permettre d'entrainer en rotation les rouleaux de nettoyage positionnés sur un même des deux axes longitudinaux 4, 5. De cette manière, les faces avant ou arrière des verres droit 12 et gauche 13 peuvent être nettoyées simultanément. Par ailleurs, dans le cas où l'espace entre les rouleaux de nettoyage avant 31a, 32a a une largeur inférieure à l'épaisseur des verres 12, 13, les moyens d'entrainement en rotation sont avantageusement configurés pour entrainer en rotation les rouleaux de nettoyage avant 31a, 32a et arrière 31b, 32b simultanément de manière à nettoyer simultanément les faces avant 12a, 13a et arrière 12b, 13b des rouleaux de nettoyage.

Il a de plus pu être observé que lorsque les rouleaux de nettoyage 31a, 32a, 31b, 32b sont dimensionnés pour être en contact avec les faces avant et arrière des verres de la paire de lunettes et sont entrainés simultanément par les moyens d'entrainement en rotation, il est avantageux de configurer les moyens d'entrainement en rotation pour que les rouleaux de nettoyage avant et arrière aient le même sens de rotation, c'est-à-dire que l'ensemble des rouleaux de nettoyage 31a, 32a, 31b, 32b tournent dans le sens horaire ou antihoraire lorsque le dispositif selon l'invention est observé d'un point de vue latéral droit ou gauche. Cette configuration permet en effet d'annuler la résultante des forces exercée par les rouleaux de nettoyage avant 31a, 32a et arrière 31b, 32b sur les verres droit 12 et gauche 13, et donc de ne pas générer de mouvement substantiel de la paire de lunettes 11 vers le haut ou le bas lors du nettoyage.

En vue d'être entrainés en rotation, les rouleaux de nettoyage 31a, 31b, 32a, 32b doivent être montés sur des arbres mécaniques mobiles en rotation sur la structure rigide 1 et connectés aux moyens d'entrainement en rotation 6a, 6b, 7a, 7b. Dans un mode de réalisation, chaque rouleau de nettoyage 31a, 31b, 32a, 32b peut être monté sur un arbre mécanique différent. Alternativement, les rouleaux de nettoyage situés sur un même axe longitudinal 4, 5 peuvent être montés sur un unique arbre mécanique.

Dans le dispositif représenté aux Figures 1-3, la structure rigide 1 comprend un boitier la. Ce boitier la comprend un profil en U dans sa partie supérieure. Ce profil en U définit donc une partie concave du boitier la et est délimité par une paroi inférieure et deux parois latérales parallèles aux axes longitudinaux 4 et 5. Des trous traversants sont percés dans les parois latérales de manière à laisser passer les rouleaux de nettoyage 31a, 31b, 32a, 32b faisant saillie vers l'intérieur du profil en U. Les ouvertures latérales 15a et 15b se trouvant dans des plans perpendiculaires aux axes longitudinaux 4 et 5 constituent des passages de branche pour recevoir les branches dépliées 14a, 14b de la paire de lunettes 11 lorsqu'elle est introduite dans le dispositif. Un tel boitier la permet d'envelopper les moteurs électriques 6a, 6b et les organes de transmission de manière à prévenir leur encrassement et aussi à les protéger de manipulations inappropriées ou dangereuse par l'utilisateur. Outre son rôle protecteur, ce boitier la a également un rôle esthétique permettant de moduler l'apparence extérieure du dispositif selon l'invention.

Le dispositif selon l'invention comprend au moins un interrupteur pour l'actionnement des moyens d'entrainement en rotation 6a, 6b. Cet interrupteur, raccordé électriquement aux moyens d'entrainement en rotation 6a, 6b peut être un bouton poussoir positionné sur la structure rigide 1, et le boitier la comprend alors avantageusement un passage pour permettre à l'utilisateur d'accéder à ce bouton poussoir. Alternativement, l'interrupteur peut, comme illustré à la Figure 3, être configuré pour être un bouton poussoir 18 actionné automatiquement par le pont de nez de la paire de lunettes 11 lorsque cette dernière est insérée dans le dispositif. Dans cette configuration, l'avantage est que l'utilisateur ne doit pas se soucier d'appuyer lui-même sur l'interrupteur pour mettre le dispositif en marche. Il peut se contenter d'introduire la paire de lunettes 11 dans le dispositif en veillant à appliquer une légère pression sur le bouton poussoir 18 à l'aide du pont de nez de la paire de lunettes 11. Le bouton poussoir 18 peut être configuré pour qu'une pression constante soit nécessaire pour actionner les moyens d'entrainement en rotation 6a, 6b. Alternativement, il peut être configuré de manière à ce qu'une première pression enclenche la mise en marche des moyens d'entrainement en rotation 6a, 6b, et qu'une seconde pression soit nécessaire pour provoquer leur arrêt.

Les rouleaux de nettoyage 31a, 31b, 32a, 32b, qui ont avantageusement une forme définie par une géométrie de révolution, sont donc constitués d'un matériau leur conférant un caractère nettoyant pour des verres de lunettes. Ils peuvent ainsi être constitués d'un tissu à base de microfibres. Il a de plus été observé qu'il était avantageux que les rouleaux de nettoyage 31a, 31b, 32a, 32b soient réalisés avec un gradient de densité de masse orienté radialement de l'extérieur vers l'intérieur des rouleaux. Dans cette configuration, la densité de masse du matériau ou tissu utilisé pour les rouleaux de nettoyage 31a, 31b, 32a, 32b est donc une fonction décroissante de la distance radiale par rapport à l'axe de révolution des rouleaux de nettoyage 31a, 31b, 32a, 32b.

Les rouleaux de nettoyage 31a, 31b, 32a, 32b sont par ailleurs avantageusement montés de manière amovible sur des arbres mécaniques mobiles en rotation. De cette manière, les rouleaux de nettoyage 31a, 31b, 32a, 32b peuvent être extraits du dispositif en vue de leur nettoyage en cas d'encrassement ou de leur remplacement en cas d'usure.

Le dispositif selon l'invention peut être dimensionné aussi bien pour recevoir des lunettes de taille adulte que des lunettes de taille enfant. Suivant la largeur L du dispositif, il sera en effet adapté à des lunettes de taille enfant ou de taille adulte. L'invention se rapporte également à un kit comprenant une structure rigide 1, deux boitiers la de largeurs L différentes et deux jeux différents de rouleaux de nettoyage 31a, 31b, 32a, 32b. De cette manière, à partir d'une même structure rigide 1, deux dispositifs de tailles différentes pourront être montés, avantageusement l'un adapté à des lunettes de taille enfant et l'autre à des lunettes de taille adulte. Le dispositif selon l'invention pourra alors être commercialisé sous forme d'un kit comprenant :
- une structure rigide 1,
- un premier boitier la ayant une première largeur L1 et un premier jeu de rouleaux de nettoyage 31a, 31b, 32a, 32b, lesdits premiers boitier la et premier jeu de rouleaux de nettoyage 31a, 31b, 32a, 32b ayant des dimensions adaptées pour monter à partir de la structure rigide 1 un dispositif pour le nettoyage d'une paire de lunettes 11 de taille enfant,
- un second boitier la ayant une seconde largeur L2 > L1 et un second jeu de rouleaux de nettoyage 31a, 31b, 32a, 32b, lesdits second boitiers la et second jeu de rouleaux de nettoyage 31a, 31b, 32a, 32b ayant des dimensions adaptées pour monter à partir de la structure rigide 1 un dispositif pour le nettoyage d'une paire de lunettes 11 de taille adulte.

## Revendications

1. Dispositif pour le nettoyage des verres d'une paire de lunettes, ladite paire de lunettes (11) comprenant un verre droit (12) et un verre gauche (13), lesdits verres droit et gauche comprenant une face avant (12a, 13a) et une face arrière (12b, 13b), ledit dispositif comprenant :
a. une structure rigide (1) comprenant une base (2) pour la stabilisation de ladite structure (1) sur une surface plane,
b. une pluralité de rouleaux de nettoyage (31a, 31b, 32a, 32b), lesdits rouleaux (31a, 31b, 32a, 32b) étant montés mobiles en rotation sur ladite structure rigide (1) et étant répartis sur un axe longitudinal avant (4) et un axe longitudinal arrière (5) de ladite structure, ledit axe longitudinal avant (4) étant parallèle à l'axe longitudinal arrière (5),
c. des moyens d'entrainement en rotation (6, 7) desdits rouleaux de nettoyage (31a, 31b, 32a , 32b), lesdits moyens étant aptes à entrainer en rotation simultanément les rouleaux de nettoyage positionnés sur un même des deux axes longitudinaux (4, 5),
dans lequel :
- ladite structure rigide (1) comprend des passages pour introduire la paire de lunettes (11) dans la structure avec ses verres droits et gauches positionnés dans un espace de nettoyage (8) entre les rouleaux de nettoyage (31a, 32a) positionnés sur l'axe longitudinal avant (4) et les rouleaux de nettoyage (31b, 32b) positionnés sur l'axe longitudinal arrière (5), lesdits passages comprenant des passages de branches (15a, 15b) pour recevoir les branches dépliées (14a, 14b) de ladite paire de lunettes autour des rouleaux de nettoyage (31b, 32b) positionnés sur l'axe longitudinal arrière (5),
- lesdits rouleaux de nettoyage (31a, 32a) positionnés sur l'axe longitudinal avant (4) sont distribués sur ledit axe longitudinal avant (4) de manière à nettoyer simultanément la face avant (12a, 13a) des verres droit et gauche de ladite paire de lunettes,
- lesdits rouleaux de nettoyage (31b, 32b) positionnés sur l'axe longitudinal arrière (5) sont distribués sur ledit axe longitudinal arrière (5) de manière à nettoyer simultanément la face arrière des verres droit (12) et gauche (13) de ladite paire de lunettes (11).

2. Dispositif selon la revendication 1, dans lequel lesdits moyens d'entrainement en rotation (6, 7) sont aptes à entrainer en rotation simultanément les rouleaux de nettoyage positionnés sur l'axe longitudinal avant (4) et sur l'axe longitudinal arrière (5).

3. Dispositif selon la revendication 2, dans lequel lesdits moyens d'entrainement (6, 7) sont configurés pour entrainer en rotation selon un même sens de rotation les rouleaux de rotation positionnés sur l'axe longitudinal avant (4) et sur l'axe longitudinal arrière (5).

4. Dispositif selon l'une des revendications précédentes, dans lequel les rouleaux de nettoyage (31a, 32a) positionnés sur l'axe longitudinal avant (4) sont des rouleaux cylindriques dont les axes de révolution sont alignés sur ledit axe longitudinal avant (4).

5. Dispositif selon la revendication 4, dans lequel deux rouleaux de nettoyage sont positionnés sur l'axe longitudinal avant (4), les deux rouleaux de nettoyage comprenant un rouleau de nettoyage avant droit (31a) pour le nettoyage de la face avant (12a) du verre droit (12) de la paire de lunettes et un rouleau de nettoyage avant gauche (32a) pour le nettoyage de la face avant (13a) du verre gauche (13) de la paire de lunettes (11), un espace libre entre les rouleaux de nettoyage avant droit et gauche (31a, 32a) étant prévu sur l'axe longitudinal avant (4), ledit espace libre étant configuré pour faire face au pont de nez de la paire de lunettes (11) introduite dans la structure rigide (1).

6. Dispositif selon l'une des revendications précédentes, dans lequel les rouleaux de nettoyage (31b, 32b) positionnés sur l'axe longitudinal arrière (5) sont des rouleaux cylindriques dont les axes de révolution sont alignés sur ledit axe longitudinal arrière (5).

7. Dispositif selon la revendication 6, dans lequel deux rouleaux de nettoyage sont positionnés sur l'axe longitudinal arrière (5), les deux rouleaux de nettoyage comprenant un rouleau de nettoyage arrière droit (31b) pour le nettoyage de la face arrière (12b) du verre droit (12) de la paire de lunettes (11) et un rouleau de nettoyage arrière gauche (32b) pour le nettoyage de la face arrière (13b) du verre gauche (13) de la paire de lunettes (11), un espace libre entre les rouleaux de nettoyage arrière droit et gauche (31b, 32b) étant prévu sur l'axe longitudinal arrière (4), ledit espace libre étant configuré pour faire face au pont de nez de la paire de lunettes (11) introduite dans la structure rigide (1).

8. Dispositif selon l'une quelconque des revendications précédentes, dans lequel ladite structure rigide (1) comprend un boitier (la), ledit boitier (la) comprenant profil en U dans sa partie supérieure, ledit profil en U définissant une partie concave du boitier délimitée par une paroi inférieure et deux parois latérales, des trous traversants étant percés dans les parois latérales du profil en U, les rouleaux de nettoyage (31a, 31b, 32a, 32b) étant saillants vers l'intérieur dudit profil en U à travers lesdits trous traversants.

9. Dispositif selon l'une quelconque des revendications 1 à 8 dans lequel les rouleaux de nettoyage avant sont fixés à un même arbre rotatif avant.

10. Dispositif selon l'une quelconque des revendications 1 à 9 dans lequel les rouleaux de nettoyage arrière sont fixés à un même arbre rotatif arrière.

11. Dispositif selon l'une quelconque des revendications précédentes comprenant un bouton poussoir sur la structure rigide pour actionner les moyens d'entrainement en rotation des rouleaux de nettoyage.

12. Dispositif selon la revendication 11 dans lequel le bouton poussoir (18) est disposé dans l'espace de nettoyage (8) de manière à entrer en contact avec le pont de nez de la paire de lunettes (11) et ainsi actionner les moyens d'entrainement lorsque ladite paire de lunettes est introduite dans ladite structure (1).

13. Dispositif selon l'une quelconque des revendications précédentes dans lequel les rouleaux de nettoyage (31a, 31b, 32a, 32b) comprennent un tissu à base de microfibres et dans lequel un gradient de densité de tissu est appliqué auxdits rouleaux de nettoyage (31a, 31b, 32a, 32b), ledit gradient étant orienté radialement de l'extérieur vers l'intérieur desdits rouleaux de nettoyage (31a, 31b, 32a, 32b).

14. Dispositif selon l'une quelconque des revendications précédentes, dans lequel les rouleaux de nettoyage sont montés de manière amovible sur des arbres rotatifs mobiles en rotation par rapport à ladite structure rigide (1).

15. Kit pour le montage d'un dispositif selon la revendication 8 comprenant :
- une structure rigide (1),
- un premier boitier (la) ayant une première largeur L1 et un premier jeu de rouleaux de nettoyage (31a, 31b, 32a, 32b), lesdits premiers boitier (la) et premier jeu de rouleaux de nettoyage (31a, 31b, 32a, 32b) ayant des dimensions adaptées pour monter à partir de ladite structure rigide (1) un dispositif pour le nettoyage d'une paire de lunettes (11) de taille enfant,
- un second boitier (la) ayant une seconde largeur L2 > L1 et un second jeu de rouleaux de nettoyage (31a, 31b, 32a, 32b), lesdits second boitiers (la) et second jeu de rouleaux de nettoyage (31a, 31b, 32a, 32b) ayant des dimensions adaptées pour monter à partir de ladite structure rigide (1) un dispositif pour le nettoyage d'une paire de lunettes (11) de taille adulte.
